(19) **Europäisches Patentamt** / **European Patent Office** / **Office européen des brevets**

(11) **EP 4 438 346 B1**

(12) **EUROPEAN PATENT SPECIFICATION**

(45) Date of publication and mention of the grant of the patent:
**01.04.2026 Bulletin 2026/14**

(21) Application number: **22898157.7**

(22) Date of filing: **23.06.2022**

(51) International Patent Classification (IPC):
**B60C 19/00** (2006.01)    **B60C 3/04** (2006.01)
**B60C 9/18** (2006.01)    **B60C 9/20** (2006.01)
**B60C 9/22** (2006.01)    **B60C 11/00** (2006.01)

(52) Cooperative Patent Classification (CPC):
**B60C 9/18; B60C 3/04; B60C 9/20; B60C 9/2006;**
**B60C 9/2009; B60C 9/22; B60C 11/00;**
**B60C 19/00;** B60C 2019/004; Y02T 10/86

(86) International application number:
**PCT/JP2022/025164**

(87) International publication number:
**WO 2023/095372 (01.06.2023 Gazette 2023/22)**

(54) **PNEUMATIC RADIAL TIRE FOR PASSENGER VEHICLE**

RADIALER LUFTREIFEN FÜR PERSONENKRAFTWAGEN

PNEUMATIQUE RADIAL POUR VÉHICULE DE TOURISME

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **25.11.2021 JP 2021191549**

(43) Date of publication of application:
**02.10.2024 Bulletin 2024/40**

(73) Proprietor: **BRIDGESTONE CORPORATION**
**Chuo-ku**
**Tokyo 104-8340 (JP)**

(72) Inventor: **KUWAYAMA Isao**
**Tokyo 104-8340 (JP)**

(74) Representative: **Marks & Clerk LLP**
**15 Fetter Lane**
**London EC4A 1BW (GB)**

(56) References cited:
EP-A1- 2 774 780       JP-A- 2005 088 662
JP-A- 2005 170 222     JP-A- 2013 063 765
JP-A- 2014 118 146     JP-A- 2019 217 998
JP-A- 2020 055 461     JP-A- 2021 054 153
US-A1- 2013 168 000    US-A1- 2016 075 189

## Description

TECHNICAL FIELD

This invention relates to a pneumatic radial tire for passenger vehicles.

BACKGROUND

Conventionally, those pneumatic tires have been known, which comprise, on the tire inner surface or inside the tire, a sensor to detect the internal conditions of the pneumatic tire, such as the air pressure thereof, or a communication device such as a radio frequency (RF) tag provided with a storage section capable of storing unique identification information, etc. for the pneumatic tire. For example, a sensor as a communication device can be used to determine the condition of the tire during driving, and various tire information obtained from the storage section of the RF tag as a communication device can be used for maintenance services and other purposes.

For example, PTL 1 discloses a pneumatic tire in which an RF tag is disposed between carcass plies and other components.

EP 2 774 780 A1 relates to a pneumatic radial tire for a passenger vehicle, having: a cross sectional width and an outer diameter controlled under an appropriate relationship; and an optimized configuration of a crown portion thereof.

US 2013/168000 A1 relates to a pneumatic radial tire for a passenger vehicle having a ratio W/L where W is a cross-sectional width and L is an outer diameter. The tire also has a belt-reinforcing layer having a high rigidity and disposed between a belt and a tread.

JP 2021 054153 A relates to a pneumatic tire which comprises a tread part such that: in a circumferential direction main groove positioned at the outermost side at installation on a vehicle, a ratio W1/W2 of a groove width W1 in a position at a groove depth of 90% when a groove depth of a groove bottom is 100% to a groove width W2 on a tread part surface is 0.30-0.75; a ratio La/Lb of a length La in a circumferential direction C of the tire to a sum total Lb of a sum Lb 1 of lengths of edge components in a width direction W of width direction grooves, and a sum Lb2 of lengths of edge components in a width direction W of sipings is 0.10-0.20; and a rubber composition constituting the tread part 2 has 5°C tan$\delta$ of 0.10-0.60, |20°C tan$\delta$ - 50°C tan$\delta$| of 0.10 or less, and 20°C E' of 5.0 MPa or more.

CITATION LIST

Patent Literature

PTL 1: JP 2020-055450 A1

SUMMARY

(Technical Problem)

However, in the tire described in PTL 1, the RF tag is in contact with the carcass ply, so the deformation of the carcass ply during tire rolling affects the RF tag, and the durability of RF tag may be compromised. In this way, the durability of RF tags could be compromised due to the tire deformation and other factors. And such problems can occur not only with the RF tags but also with communication devices provided in tires in general. On the other hand, it is possible to ensure the durability by covering the communication devices with a protective material. However, this would increase the weight due to the protective material, and also the protective material may reduce communication performance. This is why it has been generally difficult to achieve both durability and communication performance in communication devices.

It is therefore an object of the present invention to provide a pneumatic radial tire for passenger vehicles which can achieve both durability and communication performance of communication devices.

(Solution to Problem)

The gist structure of the present invention is as follows.

(1) A pneumatic radial tire for passenger vehicles comprising a belt consisting of one or more belt layers, a tread, and a communication device, wherein

the tire has only one circumferential main groove extending in the tire circumferential direction, the circumferential main groove having a width of equal to or more than 2 (mm), or the tire does not have circumferential main grooves, on a surface of the tread,
a cross-sectional width SW of the tire is less than 165 (mm), and a ratio SW/OD of the cross-sectional width SW to an outer diameter OD of the tire is 0.26 or less,
belt cords constituting the belt layer are non-metallic cords, and
the communication device is provided in the tread.

(2) A pneumatic radial tire for passenger vehicles comprising a belt consisting of one or more belt layers, a tread, and a communication device, wherein

the tire has only one circumferential main groove extending in the tire circumferential direction, the circumferential main groove having a width of equal to or more than 2 (mm), or the tire does not have circumferential main grooves, on a surface of the tread,
a cross-sectional width SW of the tire is less than 165 (mm),
the cross-sectional width SW (mm) and an outer diameter OD (mm) of the tire satisfy a relational expression:

$$OD \text{ (mm)} \geq -0.0187 \times SW \text{ (mm)}^2 + 9.15 \times SW \text{ (mm)} - 380,$$

belt cords constituting the belt layer are non-metallic cords, and
the communication device is provided in the tread.

(Advantageous Effect)

According to the present invention, it is possible to provide a pneumatic radial tire for passenger vehicles which can achieve both durability and communication performance of communication devices.

BRIEF DESCRIPTION OF THE DRAWINGS

In the accompanying drawings:

FIG. 1 is a schematic diagram illustrating the cross-sectional width SW and the outer diameter OD of the tire; and
FIG. 2 is a cross-sectional view in the tire width direction of a pneumatic radial tire for passenger vehicles according to one embodiment of this invention.

DETAILED DESCRIPTION

The following is a detailed illustration of the embodiment of the present invention with reference to the drawings.

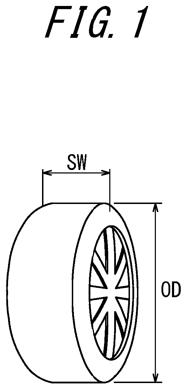

Figure 1 is a schematic diagram illustrating the cross-sectional width SW and the outer diameter OD of the tire.
A pneumatic radial tire for passenger vehicles (hereinafter referred to simply as "tire") of one embodiment of the present invention has a cross-sectional width SW of less than 165 (mm) and a ratio SW/OD of the cross-sectional width SW to an outer diameter OD of the tire is 0.26 or less, forming a narrow width and large diameter. By making the cross-sectional width SW of the tire relatively narrower than the outer diameter OD of the tire, air resistance can be reduced. At the same time, by making the outer diameter OD of the tire relatively larger than the cross-sectional width SW of the tire, rolling resistance can be reduced by suppressing deformation of the tread rubber near the ground contact patch of the tire. These can improve the fuel efficiency of the tire. The above SW/OD is preferably 0.25 or less, and more preferably 0.24 or less.
The above ratio is preferably satisfied when the internal pressure of the tire is 200 kPa or higher, more preferably when it is 220 kPa or higher, and even more preferably when it is 280 kPa or higher. This is because rolling resistance can be reduced. On the other hand, the above ratio is preferably satisfied when the internal pressure of the tire is 350 kPa or less. This is because ride comfort can be improved.
Here, the cross-sectional width SW of the tire is preferably 105 to 145 mm, and 115 to 135 mm is more preferred.
In addition, the aspect ratio of the tire is preferably 45 to 70 when the cross-sectional width SW and the outer diameter OD of the tire meet the above ratio, and 45 to 65 is more preferred.
Specific tire sizes are not limited, but can be 105/50R16, 115/50R17, 125/55R20, 125/60R18, 125/65R19, 135/45R21, 135/55R20, 135/60R17, 135/60R18, 135/60R19, 135/65R19, 145/45R21, 145/55R20, 145/60R16, 145/60R17, 145/60R18, 145/60R19, 145/65R19, 155/45R18, 155/45R21, 155/55R18, 155/55R19, 155/55R21, 155/60R17, 155/65R18, 155/70R17, or 155/70R19, as an example.
Alternatively, the cross-sectional width SW of the tire is less than 165 mm, and the cross-sectional width SW (mm) and the outer diameter OD (mm) of the tire satisfy the relational expression:

$$OD \ (mm) \geq -0.0187 \times SW \ (mm)^2 + 9.15 \times SW \ (mm) - 380,$$

and the tire has a narrow width and a large diameter.

By satisfying the above relational expression, air resistance and rolling resistance can be reduced, thereby improving the fuel efficiency of the tire.

In the third form, as for the cross-sectional width SW and the outer diameter OD of the tire, the ratio SW/OD is preferably 0.26 or less, more preferably 0.25 or less, and even more preferably 0.24 or less, after satisfying the above relational expression. This is because the fuel efficiency of the tire can be further improved.

The above relational expression and/or the ratio is preferably satisfied when the internal pressure of the tire is 200 kPa or higher, more preferably when it is 220 kPa or higher, and even more preferably when it is 280 kPa or higher. This is because rolling resistance can be reduced. On the other hand, the above relational expression and/or the ratio is preferably satisfied when the internal pressure of the tire is 350 kPa or less. This is because ride comfort can be improved.

Here, the cross-sectional width SW of the tire is preferably 105 to 145 mm, and 115 to 135 mm is more preferred.

In addition, the aspect ratio of the tire is preferably 45 to 70 when the cross-sectional width SW and the outer diameter OD of the tire satisfy the above relational expression, and 45 to 65 is more preferred.

Specific tire sizes are not limited, but can be 105/50R16, 115/50R17, 125/55R20, 125/60R18, 125/65R19, 135/45R21, 135/55R20, 135/60R17, 135/60R18, 135/60R19, 135/65R19, 145/45R21, 145/55R20, 145/60R16, 145/60R17, 145/60R18, 145/60R19, 145/65R19, 155/45R18, 155/45R21, 155/55R18, 155/55R19, 155/55R21, 155/60R17, 155/65R18, 155/70R17, or 155/70R19, as an example.

The tire of this embodiment is a pneumatic radial tire for passenger vehicles. This tire is particularly suitable for use as a tire mounted on a vehicle for personal mobility.

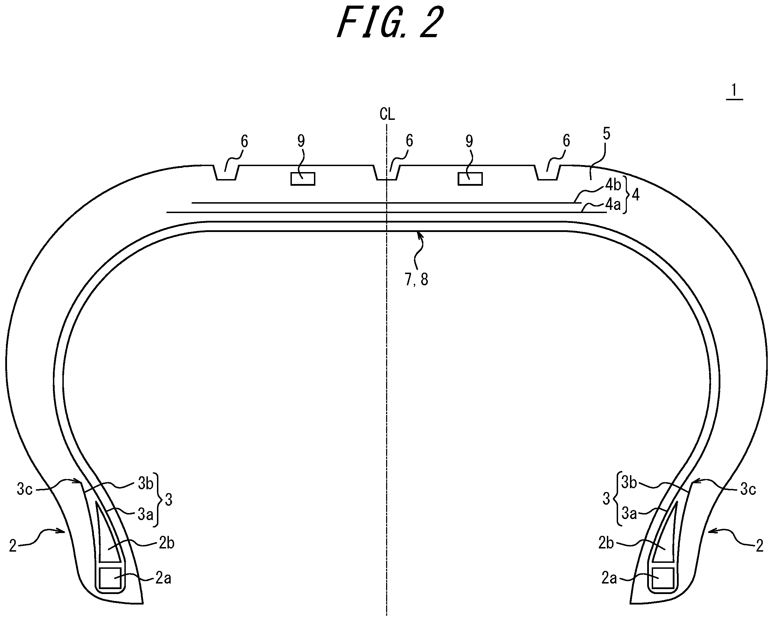

Figure 2 is a cross-sectional view in the tire width direction of a pneumatic radial tire for passenger vehicles according to one embodiment of this invention. Figure 2 illustrates a cross-sectional view in the width direction of the tire under reference condition, with the tire mounted on a rim, filled to the prescribed internal pressure, and unloaded. As illustrated in Figure 2, the tire 1 comprises a carcass 3 consisting of plies of radially arranged cords that straddle toroidally between a pair of bead portions 2. The tire 1 also comprises a belt 4 consisting of two belt layers 4a and 4b in the illustrated example, and a tread 5, in this order, on the outer side of the carcass 3 in the tire radial direction.

The aforementioned "rim" refers to the standard rim in the applicable size (Measuring Rim in ETRTO's STANDARDS MANUAL and Design Rim in TRA's YEAR BOOK) as described or as may be described in the future in the industrial standard, which is valid for the region in which the tire is produced and used, such as JATMA YEAR BOOK of JATMA (Japan Automobile Tyre Manufacturers Association) in Japan, STANDARDS MANUAL of ETRTO (The European Tyre and Rim Technical Organization) in Europe, and YEAR BOOK of TRA (The Tire and Rim Association, Inc.) in the United States (That is, the "rim section" of the above "wheel" includes current sizes as well as future sizes to be listed in the aforementioned industrial standards. An example of the "size as described in the future" could be the sizes listed as "FUTURE DEVELOPMENTS" in the ETRTO 2013 edition.). For sizes not listed in these industrial standards, the "rim" refers to a rim with a width corresponding to the bead width of the tire.

In addition, the "prescribed internal pressure" refers to the air pressure (maximum air pressure) corresponding to the maximum load capacity of a single wheel in the applicable size and ply rating, as described in the aforementioned JATMA, and others. In the case that the size is not listed in the aforementioned industrial standards, the "prescribed internal pressure" refers to the air pressure (maximum air pressure) corresponding to the maximum load capacity specified for each vehicle in which the tire is mounted.

The "maximum load" described below means the load corresponding to the maximum load capacity described above.

In this example, bead cores 2a are embedded in each of the pair of bead portions 2. In the present invention, the cross-sectional shape and material of the bead core 2a are not particularly limited, and can be of the configuration normally used in pneumatic radial tires for passenger vehicles. In the present invention, the bead core 2a may be divided into a plurality of small bead cores. Alternatively, in the present invention, the tire can be configured without the bead core 2a.

The tire 1 in the illustrated example has an abbreviated triangular-shaped bead filler 2b in cross section on the outer side of the bead core 2a in the tire radial direction. The cross-sectional shape of the bead filler 2b is not limited to this example, nor is its material. Alternatively, the tire can be made lighter by not having the bead filler 2b.

In this embodiment, the tire 1 can also be configured with a rim guard. In addition, in this embodiment, the bead portion 2 can be further provided with an additional reinforcement member such as a reinforcement rubber or a cord layer for reinforcement or other purposes. Such additional members can be provided in various positions relative to the carcass 3 and the bead filler 2b.

In the example illustrated in Figure 2, the carcass 3 consists of a single carcass ply. On the other hand, the number of carcass plies in the present invention is not limited and can be two or more. In the example illustrated in Figure 2, the carcass 3 has a carcass body portion 3a that straddles toroidally between the pair of bead portions 2 and carcass turn-up portions 3b that is folded around the bead core 2a from the carcass body portion 3a. On the other hand, in the present invention, the carcass turn-up portions 3b can be wrapped around the bead core 2a, or these can be sandwiched between a number of divided small bead cores. In the illustration, the end 3c of the carcass turn-up portion 3b is located on the outer side in the tire radial direction than the tire radially outer end of the bead filler 2b and on the inner side in the tire radial direction than the tire maximum width position. This makes it possible to reduce the weight of the tire while ensuring the rigidity of the sidewall portion. On the other hand, in the present invention, the end 3c of the carcass turn-up portion 3b may be located on the inner side in the tire radial direction than the tire radially outer end of the bead filler 2b, or on the outer side in the tire radial direction than the tire maximum width position. Alternatively, the end 3c of the carcass turn-up portion 3b can be of an envelope structure, in which it is positioned between the carcass body portion 2a and the belt 4 in the tire radial direction, and is positioned inner side in the tire width direction than the end of the belt 4 (e.g., the end of the belt layer 4b). Furthermore, when the carcass 3 is constituted by a plurality of carcass plies, the position of the end 3c of the carcass turn-up portions 3b (e.g., in the tire radial direction) can be the same or different among the carcass plies. The number of cords in the carcass 3 is not particularly limited, but can be in the range of 20 to 60 cords/50 mm, for example. In addition, various structures can be used for the carcass lines. For example, in the tire radial direction, the carcass maximum width position can be moved closer to the bead portion 2 side or to the tread portion 5 side. For example, the carcass maximum width position can be provided at the position in the range of 50% to 90% of the tire cross-sectional height from the bead baseline toward the outer side in the tire radial direction. The above-mentioned "radially arranged" means at least 85° with respect to the tire circumferential direction, preferably 90° with respect to the tire circumferential direction.

The tire of this embodiment preferably has one or more inclined belt layers consisting of a rubberized layer of cords extending at an angle with respect to the tire circumferential direction. It is most preferable to have two layers for the combination of weight reduction and suppression of distortion of the shape of the contact patch. From the viewpoint of weight reduction, one belt layer can be used, and from the viewpoint of suppressing distortion of the shape of the contact patch, three or more layers can be used. In the example illustrated in Figure 2, of the two belt layers 4a and 4b, the tire widthwise width of the belt layer 4b which locates on the outer side in the tire radial direction is smaller than that of the belt layer 4a which is locates on the inner side in the tire radial direction. On the other hand, the tire widthwise width of the belt layer 4b which locates on the outer side in the tire radial direction can be larger than or the same as that of the belt layer 4a which locates on the inner side in the tire radial direction. The tire widthwise width of the belt layer with the largest tire widthwise width (belt layer 4a in the illustrated example) is preferably 90 to 115% of the ground contact width, and especially preferred when it is 100 to 105% of the ground contact width. Note, that the "ground contact width" refers to the distance in the tire width direction between the above-mentioned ground contact edges E.

In this embodiment, the belt cords constituting the belt layers 4a and 4b are non-metallic cords. An example of the non-metallic cord is an organic fiber cord such as Kevlar® (Kevlar is a registered trademark in Japan, other countries, or both) nylon or aramid, etc.

In this embodiment, the inclination angle of the belt cords of the belt layers 4a and 4b is preferably 10° or more with respect to the tire circumferential direction. In this embodiment, the inclination angle of the belt cords of the belt layers 4a and 4b should be at a high angle, it is specifically 20° or more with respect to the tire circumferential direction, preferably 35° or more, and especially in a range of 55° to 85° with respect to the tire circumferential direction. This is because an inclination angle of 20° or more (preferably 35° or more) increases the rigidity of the tire in the tire width direction and improves the handling stability performance, especially during cornering. In addition, this is because shear deformation of the interlayer rubber can be reduced to reduce rolling resistance.

In the illustrated example, the tread rubber constituting the tread 5 consists of single layer. On the other hand, in this embodiment, the tread rubber constituting the tread 5 may be formed by a plurality of different rubber layers laminated in the tire radial direction. For the above plurality of rubber layers, rubbers with different tangent loss, modulus, hardness, glass transition temperature, material, etc. can be used. The ratio of the thicknesses in the tire radial direction of the plurality of rubber layers may vary in the tire width direction, and only the bottom of the circumferential main groove, etc. may have a different rubber layer than the surrounding area. In addition, the tread rubber constituting the tread 5 may be formed by a plurality of rubber layers that differ in the tire width direction. For the above plurality of rubber layers, rubbers with different tangent loss, modulus, hardness, glass transition temperature, material, etc. can be used. The ratio of the tire widthwise width of the plurality of rubber layers may vary in the tire radial direction, and only some limited areas, such as only near the circumferential main groove, only near the ground contact edge, only in the shoulder land portion, and only in the center land portion, can have a different rubber layer than the surrounding area.

In the illustrated example, not according to the invention, this tire 1 has three circumferential main grooves 6 extending in the tire circumferential direction. Specifically, the tire 1 has one circumferential main groove 6 on the tire equatorial plane CL and one circumferential main groove 6 on each shoulder area on both sides of the tire equatorial plane CL in the tire width direction. The width (opening width) of the circumferential main grooves 6 is not limited, but can be 2 mm to 5 mm, for example. In the present invention, the number and arrangement of the circumferential main grooves 6 are not particularly limited to the above examples. In addition, width direction grooves extending in the tire width direction, and sipes that is closed when touching the ground can also be provided as needed.

The tire 1 of this embodiment has an inner liner 8 on the inner surface 7 of the tire (also referred to simply as the tire inner surface 7). The thickness of the inner liner 8 is preferably about 1.5 mm to 2.8 mm. This is because it can effectively reduce vehicle interior noise in the 80 to 100 Hz range. The air permeability coefficient of the rubber composition constituting the inner liner 8 is preferably $1.0 \times 10^{-14}$ cc-cm/(cm$^2$-s-cmHg) or higher and $6.5 \times 10^{-10}$ cc-cm/(cm$^2$-s-cmHg) or lower.

Here, as illustrated in Figure 2, the tire comprises a communication device 9. The communication device 9 need only be capable of wireless communication with a predetermined device outside the tire 1, and the configuration of the communication device 9 is not limited. In this embodiment, the communication device 9 is an RF tag. The RF tag is also referred to as an RFID (Radio Frequency Identification) tag. The communication device 9 may be configured to include, for example, an IC chip that constitutes a control section and a storage section, and one or more antennas connected to the IC chip. For example, the communication device 9 may have an overall longitudinal shape with two antennas extending in a straight, wavy, or spiral shape extending in opposite directions from the IC chip. The IC chip may also be operated by induced electromotive forces generated by electromagnetic waves received by one or more antennas. In other words, the communication device 9 may be a passive communication device. Alternatively, the communication device 9 may further comprise a battery and be able to communicate by generating electromagnetic waves with its own power. In other words, the communication device 9 may be an active communication device. Note, that the communication device 9 may be covered by coating rubber. The communication device 9 can be a sensor (e.g., a sensor capable of detecting tire temperature), etc., in addition to an RF tag.

In this embodiment, the communication device 9 is provided in the tread 5, more specifically, it is provided on the outer side in the tire radial direction than the belt layer 4b, which is the outermost belt layer in the tire radial direction among one or more belt layers.

The following is an explanation of the effects of the pneumatic radial tire for passenger vehicles of this embodiment.

First, in the pneumatic radial tire for passenger vehicles of this embodiment, the cross-sectional width SW is less than 165 (mm) and the ratio SW/OD of the cross-sectional width SW to the outer diameter OD of the tire is 0.26 or less (or, the relational expression, OD (mm) $\geq$ -0.0187 $\times$ SW (mm)$^2$ + 9.15 $\times$ SW (mm) - 380 (mm), is satisfied). This improves the fuel efficiency of the tire, as described above. By the way, in tires with a narrow width and a large diameter, in which SW and OD are in the above relationship, the deformation of the tread 5 is smaller than in tires with a wide width and a high aspect ratio. Therefore, even if a communication device 9 is provided in this area, it is less likely to be subjected to large deformation, and the durability of the communication device 9 can be improved. Furthermore, by disposing it in the tread 5 (especially on the outer side in the tire radial direction than the belt layer 4b, which is the outermost belt layer), the communication from the road surface is improved. Here, if the belt cords are metallic cords such as steel cords, there is a risk that the communication of the communication device 9 provided in the tread 5 may be inhibited by the belt layer. However, in this embodiment, since a non-metallic cord is used for the belt cords constituting the belt layer, the communication of the communication device 9 provided in the above positions is not interfered with.

Furthermore, since the communication device 9 is disposed in the tread (on the outer side in the tire radial direction than the belt layer 4b, which is the outermost belt layer), it is easier to perform maintenance on the communication device 9 when retreading.

Thus, the pneumatic radial tire for passenger vehicles in this embodiment allow both durability and communication performance of the communication device.

The tire has one circumferential main groove extending in the tire circumferential direction, or does not have the circumferential main grooves, on a surface of the tread. This is because this configuration provides space for the communication device 9 to be embedded and also makes it easier to protect the communication device 9. Since the communication device 9 can be replaced together when retreading, the driving history, retreading history, and tread information, etc. can be stored. Here, the "surface" of the tread means the outer surface around the entire circumference of the tire that is in contact with the road surface when the tire is assembled on a rim, filled with prescribed internal pressure, and rolled under a maximum load. In addition, the "circumferential main groove" is a groove with a width (opening width) of 2 mm or more. Furthermore, "extending in the tire circumferential direction" includes cases where it extends in the circumferential direction as well as at an angle of 5° or less with respect to the tire circumferential direction, and in various shapes such as straight, zigzag, etc.

<Tire/rim assembly>

The tire/rim assembly herein is the one in which the above pneumatic radial tire for passenger vehicles is assembled into a rim. According to this tire/rim assembly, the same effects can be obtained as described for the pneumatic radial tire for passenger vehicles above. The internal pressure of the tire/rim assembly is preferably at least 200 kPa, more preferably at least 220 kPa, and even more preferably at least 280 kPa. This is because a higher internal pressure can further reduce rolling resistance. On the other hand, the internal pressure of the tire/rim assembly is preferably 350 kPa or less. This is because it improves ride comfort.

<Using method of pneumatic radial tire for passenger vehicles>

The using method of the pneumatic radial tire for passenger vehicles herein uses the pneumatic radial tire for passenger vehicles described above. According to the using method of the pneumatic radial tire for passenger cars, the same effects can be obtained as described for the above pneumatic radial tire for passenger cars. At this time, it is preferable to use it with the internal pressure of at least 200 kPa, more preferably with the internal pressure of at least 220 kPa, and even more preferably with the internal pressure of at least 280 kPa. This is because a higher internal pressure can further reduce rolling resistance. On the other hand, it is preferable to use it with the internal pressure of 350 kPa or less. This is because it improves ride comfort.
Although the embodiments of the present invention have been described above, this invention is not limited in any way to the above embodiments, but only to the appended claims. For example, in the illustrated example, one communication device is provided on each of both sides with the tire equatorial plane CL as the boundary, however, the communication device may be provided on only one side, or the number of communication devices 9 may be multiple.

REFERENCE SIGNS LIST

| 1 | Pneumatic radial tire for passenger vehicles (Tire) |
| 2 | Bead portion |
| 2 | Bead core |
| 2b | Bead filler |
| 3 | Carcass |
| 4 | Belt |
| 4a, 4b | Belt layer |
| 5 | Tread |
| 6 | Circumferential main groove |
| 7 | Tire inner surface |
| 8 | Inner liner |
| 9 | Communication device |
| CL | Tire equatorial plane |

**Claims**

1.   A pneumatic radial tire (1) for passenger vehicles comprising a belt (4) consisting of one or more belt layers (4a, 4b), a tread (5), and a communication device (9), wherein

the tire (1) has only one circumferential main groove (6) extending in the tire circumferential direction, the circumferential main groove (6) having a width of equal to or more than 2 mm, or the tire (1) does not have circumferential main grooves, on a surface of the tread (5),
a cross-sectional width SW of the tire (1) is less than 165 (mm), and a ratio SW/OD of the cross-sectional width SW to an outer diameter OD of the tire (1) is 0.26 or less,
belt cords constituting the belt layer (4a, 4b) are non-metallic cords, and
the communication device (9) is provided in the tread (5).

2.   A pneumatic radial tire (1) for passenger vehicles comprising a belt (4) consisting of one or more belt layers (4a, 4b), a tread (5), and a communication device (9), wherein

the tire (1) has only one circumferential main groove (6) extending in the tire circumferential direction, the circumferential main groove (6) having a width of equal to or more than 2 mm, or the tire (1) does not have circumferential main grooves (6), on a surface of the tread (5),
a cross-sectional width SW of the tire (1) is less than 165 (mm),
the cross-sectional width SW (mm) and an outer diameter OD (mm) of the tire (1) satisfy a relational expression:

$$OD \ (mm) \geq -0.0187 \times SW \ (mm)^2 + 9.15 \times SW \ (mm) - 380,$$

belt cords constituting the belt layer (4a, 4b) are non-metallic cords, and
the communication device (9) is provided in the tread (5).

3. The pneumatic radial tire (1) for passenger vehicles according to any one of claims 1 or 2, wherein the communication device (9) is an RF tag.


**Patentansprüche**

1. Radialluftreifen (1) für Personenkraftwagen, der einen Gürtel (4), der aus einer oder mehreren Gürtelschichten (4a, 4b) besteht, eine Lauffläche (5) und eine Kommunikationsvorrichtung (9) umfasst, wobei

der Reifen (1) entweder nur eine umlaufende Hauptrille (6) aufweist, die sich in Reifenumfangsrichtung erstreckt, die eine Breite gleich oder größer als 2 mm aufweist, oder der Reifen (1) keine umlaufenden Hauptrillen auf einer Lauffläche (5) aufweist,
eine Querschnittsbreite SW des Reifens (1) kleiner als 165 (mm) ist, und ein Verhältnis SW/OD der Querschnittsbreite SW zu dem Außendurchmesser OD des Reifens (1) 0,26 oder weniger beträgt,
die die Gürtelschicht (4a, 4b) bildenden Gürtelkorde nichtmetallische Korde sind, und
die Kommunikationsvorrichtung (9) in der Lauffläche (5) bereitgestellt ist.

2. Radialluftreifen (1) für Personenkraftwagen, der einen Gürtel (4), der aus einer oder mehreren Gürtelschichten (4a, 4b) besteht, eine Lauffläche (5) und eine Kommunikationsvorrichtung (9) umfasst, wobei

der Reifen (1) nur eine umlaufende Hauptrille (6), die sich in der Reifenumfangsrichtung erstreckt und eine Breite von mindestens 2 mm aufweist, oder der Reifen (1) keine umlaufenden Hauptrillen (6) auf der Lauffläche (5) aufweist,
eine Querschnittsbreite SW des Reifens (1) kleiner als 165 (mm) ist,
die Querschnittsbreite SW (mm) und ein Außendurchmesser OD (mm) des Reifens (1) die folgende Beziehung erfüllen:

$$OD\ (mm) \geq -0{,}0187\ SW\ (mm)^2 + 9{,}15 \times SW\ (mm) - 380,$$

die die Gürtelschicht (4a, 4b) bildenden Gürtelkorde nichtmetallische Korde sind, und
die Kommunikationsvorrichtung (9) in der Lauffläche (5) bereitgestellt ist.

3. Radialluftreifen (1) für Personenkraftwagen nach einem der Ansprüche 1 oder 2, wobei die Kommunikationsvorrichtung (9) ein RF-Tag ist.


**Revendications**

1. Pneu radial pneumatique (1) pour véhicules de tourisme comprenant une ceinture (4) consistant en une ou plusieurs couches de ceinture (4a, 4b), une bande de roulement (5) et un dispositif de communication (9), dans lequel

le pneu (1) ne présente qu'une seule rainure principale circonférentielle (6) s'étendant dans la direction circonférentielle du pneu, la rainure principale circonférentielle (6) présentant une largeur supérieure ou égale à 2 mm, ou le pneu (1) ne présente pas de rainures principales circonférentielles, sur une surface de la bande de roulement (5),
la largeur de section transversale SW du pneu (1) est inférieure à 165 mm, et le rapport SW/OD de la largeur de section transversale SW au diamètre extérieur OD du pneu (1) est inférieur ou égal à 0,26,
les cordons de ceinture constituant la couche de ceinture (4a, 4b) sont des cordons non métalliques, et
le dispositif de communication (9) est prévu dans la bande de roulement (5).

2. Pneu radial pneumatique (1) pour véhicules de tourisme comprenant une ceinture (4) consistant en une ou plusieurs couches de ceinture (4a, 4b), une bande de roulement (5) et un dispositif de communication (9), dans lequel

le pneu (1) ne présente qu'une seule rainure principale circonférentielle (6) s'étendant dans la direction circonférentielle du pneu, la rainure principale circonférentielle (6) présentant une largeur supérieure ou égale à 2 mm, ou le pneu (1) ne présente pas de rainures principales circonférentielles (6), sur une surface de la bande de roulement (5),

la largeur de section transversale SW du pneu (1) est inférieure à 165 mm,

la largeur de section transversale SW (mm) et le diamètre extérieur OD (mm) du pneu (1) satisfont à l'expression de relation :

$$OD \ (mm) \geq -0,0187 \times SW \ (mm)^2 + 9,15 \times SW \ (mm) - 380,$$

les cordons de ceinture constituant la couche de ceinture (4a, 4b) sont des cordons non métalliques, et le dispositif de communication (9) est prévu dans la bande de roulement (5).

3. Pneu radial pneumatique (1) pour véhicules de tourisme selon l'une quelconque des revendications 1 ou 2, dans lequel le dispositif de communication (9) est une étiquette RF.

# FIG. 1

FIG. 2

EP 4 438 346 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2774780 A1
- US 2013168000 A1
- JP 2021054153 A
- JP 2020055450 A